(19) Europäisches Patentamt
European Patent Office
Office européen des brevets

(11) **EP 3 252 020 A1**

(12) **EUROPÄISCHE PATENTANMELDUNG**

(43) Veröffentlichungstag:
06.12.2017 Patentblatt 2017/49

(51) Int Cl.:
*C03B 5/16* (2006.01)   *C03B 5/167* (2006.01)
*C03B 5/43* (2006.01)

(21) Anmeldenummer: 17173621.8

(22) Anmeldetag: **31.05.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **31.05.2016   DE 102016109974**

(71) Anmelder: **SCHOTT AG**
**55122 Mainz (DE)**

(72) Erfinder:
• **CLAUSSEN, Olaf**
  **55278 Undenheim (DE)**
• **REICH, Maria-Louisa**
  **60486 Frankfurt am Main (DE)**
• **PFEIFFER, Thomas**
  **55218 Ingelheim (DE)**
• **WEIDMANN, Günter**
  **Flonheim 55237 (DE)**

(74) Vertreter: **Blumbach Zinngrebe**
**Patentanwälte**
**Alexandrastrasse 5**
**65187 Wiesbaden (DE)**

(54) **VERFAHREN ZUR HERSTELLUNG EINES GLASPRODUKTES SOWIE VERFAHRENSGEMÄSS ERHALTENES GLASPRODUKT**

(57)    Die Erfindung betrifft ein Verfahren zur Herstellung eines Glasproduktes, insbesondere mit geringem Blasengehalt, aus einer Schmelze, wobei die Schmelze zumindest zum Teil mit einem Edelmetall umfassenden Bauteil in Kontakt kommt.

## Fig. 1

**Beschreibung**

Gebiet der Erfindung

Die Erfindung betrifft ein Verfahren zur Herstellung eines Glasproduktes. Ein weiterer Aspekt der Erfindung betrifft ein verfahrensgemäß erhaltenes Glasprodukt.

Hintergrund der Erfindung

Verfahren zur Herstellung von Glasprodukten sind seit vielen Jahren bekannt. War es in der Anfangszeit der industriellen Glasherstellung noch schwierig, beispielsweise eine ausreichende Reproduzierbarkeit der Glaseigenschaften herzustellen oder Gläser ohne toxische Substanzen, beispielsweise ohne Blei, herzustellen, sind diese Verfahren mittlerweile industriell sehr gut beherrscht. Auf diese Weise können Glasprodukte hergestellt werden, welche auch beispielsweise den hohen Anforderungen in der pharmazeutischen oder der Chip-Industrie genügen.

Dennoch bestehen auch heute noch eine Reihe von grundsätzlichen Problemen, die sich aus der Natur der Gläser selbst und den damit verbundenen hohen Herstellungstemperaturen ergeben. Ein solches Problem stellt beispielsweise die Wechselwirkung einer Glasschmelze mit den sie umgebenden Materialien dar. Beispielsweise kann es zur Reaktion der Glasschmelze mit dem Wannenmaterial kommen, was zu einer partiellen Auflösung der Wanne und zur lokalen Veränderung der Schmelze führt, oder auch zu einer Reaktion der Glasschmelze mit dem Material der Ziehdüsen.

Besonders unerwünscht ist hierbei die Reaktion der Glasschmelze mit denjenigen Materialien, welche Edelmetall umfassen. Jede Glasschmelze umfasst in gewissem Umfang Wasser, wobei dieses Wasser in gelöster, molekularer Form vorliegen kann, aber auch als an einzelne Schmelzkomponenten gebundene OH-Gruppen oder entsprechend der Eigendissoziation des Wassers als gelöste Ionen, welche üblicherweise als Hydroxid-Ionen (OH$^-$) und Hydroxonium-Ionen ($H_3O^+$) bezeichnet werden. Tritt eine solche Glasschmelze in Kontakt mit einem Edelmetall umfassenden Bauteil, kann es nun dazu kommen, dass die Sauerstoffkonzentration in der Glasschmelze einen kritischen Wert, die sogenannte Sättigungskonzentration, überschreitet.

Zusammenfassend lässt sich dies durch die folgende Redoxreaktion beschreiben, bei welcher Wasser in seine Einzelkomponenten zerlegt wird:

$$(1) \qquad 2\,H_2O \leftrightharpoons 2\,H_2 + O_2$$

Da Edelmetalle, beispielsweise Platin, eine hohe Durchlässigkeit für Wasserstoff aufweisen, kann der Wasserstoff durch die Edelmetall umfassenden Bauteile aus der Schmelze diffundieren. Dies hat zwei Folgen:

- Durch den Entzug eines Produkts, also hier von Wasserstoff, $H_2$, wird das Gleichgewicht von Reaktion (1) auf die rechte Seite der Reaktionsgleichung verschoben. Es kommt also zu einer - lokalen - Abreicherung von Wasserstoff und einer Anreicherung von Sauerstoff in der Schmelze.
- Wird der gebildete Sauerstoff nicht mehr von polyvalenten Elementen (z.B. Läutermitteln wie $SnO_2$) chemisch gebunden (2 SnO + $O_2$ ↔ 2 $SnO_2$), kommt es an diesen Stellen zum Auftreten von Gasblasen.

Gelangen diese Gasblasen in das Endprodukt, ist damit die Ausbeute gegebenenfalls drastisch verringert.

Die dem Mechanismus der Wasserzersetzung und damit verbunden der lokalen Entstehung von Gasblasen in der Schmelze zugrundeliegende Reaktion (1) erscheint zwar zunächst sehr einfach, ist in der Praxis jedoch nur sehr schwer beherrsch- oder beschreibbar, da die Wasserzersetzung in einer Glasschmelze von sehr vielen Faktoren beeinflusst wird, insbesondere von

- Wassergehalt sowie Löslichkeit von Wasser in der Schmelze
- Art des oder der Edelmetalle, mit welchen die Schmelze in Kontakt tritt
- Dicke des Edelmetall umfassenden Bauteils
- Temperatur und Verweilzeit des Glases an der Grenzfläche Edelmetall umfassendes Bauteil/Glas
- Redoxzustand des Glases
- Art und Gehalt der redoxaktiven Komponenten (z.B. Läutermitteln wie $SnO_2$) in der Glasschmelze
- Zusammensetzung der Atmosphäre auf der glasabgewandten Seite des Edelmetall umfassenden Bauteils.

Um das Auftreten von Gasblasen im Endprodukt zu vermeiden, bieten sich entsprechend eine Reihe von Maßnahmen an. Beispielsweise können besonders wasserarme Rohstoffe verwendet oder der Glasschmelze gezielt redoxaktive Komponenten, beispielsweise Zinnoxid, zugesetzt werden. Auch kann die Temperatur der Glasschmelze oder die Verweilzeit am Edelmetall umfassenden Bauteil so eingestellt werden, dass keine Blasen auftreten.

Allerdings sind diesen Maßnahmen jeweils auch Grenzen gesetzt, beispielsweise, wenn ein hochviskoses Glas erschmolzen wird, dessen Verweilzeit am Edelmetall umfassenden Bauteil aufgrund der hohen Schmelzviskosität nicht unterhalb einer kritischen Verweildauer verringert werden kann. Der Zusatz von redoxaktiven Substanzen kann dazu führen, dass sich störende Bestandteile in der Schmelze bilden. Sofern die Blasenbildung am Auslass des Schmelzaggregats erfolgt, ist auch die Einstellung einer Temperatur, bei der bekanntermaßen keine Wasserzersetzung in der Schmelze stattfindet, nicht ohne weiteres möglich, da für die Formgebung eines Glases bestimmte Vorgaben hinsichtlich der Schmelzviskosität und damit der Temperatur eingehalten werden müssen. In solchen Fällen müssen Maßnahmen ergriffen werden, welche am Edelmetall umfassenden Bauteil den Mechanismus der Wasserzersetzung und damit der Entstehung von Gasblasen vermindern oder gar ganz verhindern.

So ist beispielsweise vorgeschlagen worden, auf der Seite des Edelmetall umfassenden Bauteils, welche der Glasschmelze abgewandt ist, ein wasserstoffhaltiges Gas anzubieten, beispielsweise, indem das Bauteil an der der Glasschmelze abgewandten Seite von dem wasserstoffhaltigen Gas umspült wird. Dies ist insbesondere auch deswegen notwendig, weil eine ortsaufgelöste Detektion der Stellen, an welchen Wasserstoff durch das Edelmetall umfassende Bauteil diffundiert, nicht möglich ist.

Beispielhaft beschreibt die internationale Patentanmeldung WO 98/18731 A2, dass die glasabgewandte Seite eines Bauteils, welcher Platin, Molybdän, Palladium, Rhodium und Legierungen dieser Metalle enthält, beispielsweise eines Behälters, in welchem ein Glas erschmolzen wird, einem kontrollierten Wasserdampf-Partialdruck ausgesetzt ist. Auf diese Weise wird eine Diffusion von molekularem Wasserstoff durch beispielsweise ein Platinbauteil hindurch vermindert.

Dies liegt daran, dass nun auch an der Außenseite des Edelmetall umfassenden Bauteils Wasser in seine Bestandteile zersetzt wird. Der entstehende Wasserstoff $H_2$ verhindert nun die Diffusion des Wasserstoffs aus der Schmelze nach außen - allerdings kann es nun zu einer Reaktion des zunächst radikalisch vorliegenden Sauerstoffs mit dem Edelmetall kommen, beispielsweise zur Bildung eines Platinoxids, $PtO_2$. Diese Edelmetalloxide sind allerdings flüchtig, sodass durch diese Reaktionen die Wandstärke des Edelmetall umfassenden Bauteils kontinuierlich verringert wird.

Eine weitere Möglichkeit, die Diffusion von Wasserstoff durch Edelmetall umfassende Bauteile hindurch zu verringern oder zu vermeiden, besteht darin, auf der der Glasschmelze abgewandten Seite des Bauteils Wasserstoff anzubieten. Allerdings kommt es bei der vollständigen Umspülung des Edelmetall umfassenden Bauteils dazu, dass an Stellen, an denen in der Glasschmelze die Konzentration von Wasserstoff geringer ist als an der Außenseite, nun der Wasserstoff von außen in die Glasschmelze hineindiffundiert. In der Schmelze werden so lokal bestimmte Bestandteile durch den Wasserstoff reduziert, beispielsweise als Verunreinigung in der Schmelze enthaltenes Eisen, welches dann in elementarer Form vorliegt und das Edelmetall lokal legiert. Dies führt allerdings ebenfalls zu einer verminderten mechanischen Beständigkeit des Bauteils und kann weiterhin auch chemische Reaktionen zur Folge haben, welche beispielsweise in Partikel- oder Blasenbildung resultieren und ebenfalls unerwünscht sind.

Zur Verminderung der Wasserstoffdiffusion kann auch die Wandstärke des Edelmetall umfassenden Bauteils erhöht werden. Dies ist allerdings aufgrund der hohen Kosten von Edelmetallen mit deutlich erhöhten finanziellen Aufwendungen verbunden und von daher ungünstig.

Das Edelmetall umfassende Bauteil kann weiterhin auch auf der der Glasschmelze abgewandten Seite beschichtet werden.

Weiterhin gibt es auch das Prinzip der sogenannten Verglasung. Hierbei wird auf die der Glasschmelze abgewandten Seite ebenfalls eine Glasschmelze aufgebracht. Allerdings ist insbesondere an mechanisch stark beanspruchten Stellen eines Schmelzaggregats keine hinreichende Stützung solcher Aufbauten möglich, sodass sich auf diese Weise die mechanische Standzeit des Edelmetall umfassenden Bauteils ebenfalls verringert.

Es existieren somit zwar eine Reihe von Lösungsansätzen zur Verminderung der Wasserstoffdiffusion durch ein Edelmetall umfassendes Bauteil, allerdings weisen diese immer noch eine Reihe von Nachteilen auf. Es fehlt daher an einem einfachen und kostengünstigen Verfahren zur Herstellung von Glasprodukten aus einer Schmelze, bei welchen eine Blasenbildung infolge von Wasserzersetzung vermindert oder sogar ganz unterdrückt ist und störende Nebenreaktionen nicht auftreten.

Aufgabe der Erfindung

Aufgabe der Erfindung ist die Bereitstellung eines Verfahrens zur Herstellung eines Glasproduktes, insbesondere mit geringem Blasengehalt sowie ein verfahrensgemäß erhaltenes Glasprodukt.

Zusammenfassung der Erfindung

Die Aufgabe wird gelöst durch ein Verfahren nach Anspruch 1. Bevorzugte Ausführungsformen finden sich in den abhängigen Ansprüchen.

Dabei handelt es sich um ein Verfahren zur Herstellung eines Glasprodukts, insbesondere mit geringem Blasengehalt, aus einer Schmelze, wobei die Schmelze mindestens zum Teil mit einem Edelmetall umfassenden Bauteil in Berührung kommt. Für die Neubildung von $O_2$-Blasen sind sowohl die Konzentration als auch die Aktivität des chemisch und physikalisch gelösten Sauerstoffs maßgeblich. Daher wird die Größe des Sauerstoffpartialdrucks $p(O_2)$ in der Glasschmelze zur Beschreibung einer potentiellen $O_2$-Blasenbildunghsgefahr herangezogen. Die Schmelze weist also einen temperaturabhängigen Sauerstoffpartialdruck auf, wobei der Sauerstoffpartialdruck über das Volumen der Schmelze lokal variieren kann oder variiert. An den Orten des Edelmetall umfassenden Bauteils, welche in Kontakt mit der Schmelze stehen und wo der Sauerstoffpartialdruck lokal kritische Werte erreicht, insbesondere der $pO_2$ lokal auf einen kritischen Wert zwischen 0,8 bar und 1,2 bar, bevorzugt zwischen 0,9 bar und 1,1 bar, ansteigt, wird mindestens eine der folgenden Maßnahmen lediglich lokal an dem Edelmetall umfassenden Bauteil durchgeführt:

- Die der Schmelze abgewandte Seite des Edelmetall umfassenden Bauteils wird beschichtet, insbesondere mit einem Glas;
- Die der Schmelze abgewandte Seite des Edelmetall umfassenden Bauteils wird mit einer wasserhaltigen Atmosphäre kontaktiert, insbesondere mit einer wasserhaltigen Schutzgasatmosphäre (z.B. $N_2$, Edelgase, etc.); oder
- Die Dicke des Bauteils wird erhöht.

In der Regel übersteigt die Konzentration des chemisch gelösten Sauerstoffs die des physikalisch gelösten Sauerstoffs um ein Vielfaches. Unter chemisch gelöstem Sauerstoff versteht man in der Regel den Sauerstoff, der an polyvalente Elemente wie beispielsweise Zinn ($SnO$ und $SnO_2$) oder Eisen ($FeO$ und $Fe_2O_3$) gebunden ist. Für ein solches polyvalentes Element und den entsprechenden Sauerstoff gilt folgende Gleichung:

$$(2) \qquad 2\ SnO_2 \leftrightarrow 2\ SnO + O_2$$

Für diese Reaktion lässt sich nach dem Massenwirkungsgesetz eine entsprechende Gleichgewichtskonstante K formulieren, in welche die Aktivitäten der einzelnen Komponenten eingehen. Da die polyvalenten Elemente und der chemisch gebundene Sauerstoff üblicherweise in niedrigen Konzentrationen vorliegen, werden für $SnO_2$ und $SnO$ die Konzentrationen und für den Sauerstoff der entsprechende Partialdruck eingesetzt:

$$(3) \quad K(T) = [SnO] * pO_2^{1/2} / [SnO_2]$$

Da sich die Gleichgewichtskonstante K mit der Temperatur ändert, ändert sich auch entsprechend der $pO_2$ der Schmelze, ohne dass sich zwangsläufig ebenfalls das $[SnO]/[SnO_2]$-Verhältnis ändert.

Wenn nun an der Grenzfläche Edelmetall umfassendes Bauteil/Glas aufgrund der Wasserzersetzung $O_2$ gebildet wird (bei einer konstanten Temperatur), wird der Anteil an $[SnO_2]$ entsprechend Gleichung (2) ansteigen und der Anteil an $[SnO]$ sinken. Da die Gleichgewichtskonstante bei konstanter Temperatur unverändert ist, muss somit gleichzeitig mit ansteigender Konzentration an $SnO_2$ der Sauerstoffpartialdruck $pO_2$ ansteigen.

Dieser Anstieg des Sauerstoffpartialdruckes wird dann kritisch, wenn der Druck schließlich groß genug ist, um neue Blasen zu bilden.

Im Rahmen der vorliegenden Erfindung wird als Edelmetall ein Metall bezeichnet, welches aus der folgenden Auflistung stammt: Platin, Rhodium, Iridium, Osmium, Rhenium, Ruthenium, Palladium, Gold, Silber und Legierungen dieser Metalle.

Ein Bauteil wird im Rahmen der vorliegenden Erfindung als Edelmetall umfassend bezeichnet, wenn es mindestens ein Metall aus der obigen Auflistung in signifikanter Weise umfasst, also in einem Gehalt, welcher über unvermeidliche Spuren hinausgeht, insbesondere mindestens 0,1 Gew.-% beträgt.

Die Glasschmelzen der vorliegenden Erfindung umfassen oxidische Schmelzen. Sofern im Rahmen der vorliegenden Erfindung die Sauerstoffkonzentration der Schmelze betrachtet wird, ist damit, sofern nicht ausdrücklich anders angegeben, die Konzentration des in der Schmelze in gelöster Form vorliegenden Sauerstoffs gemeint. Nicht umfasst vom Begriff der Sauerstoffkonzentration der Schmelze ist, sofern dies nicht ausdrücklich anders angegeben ist, der sonstige Sauerstoffgehalt, also der Gehalt an Sauerstoff, der beispielsweise in Form von Ionen oder gebunden an weitere Elemente wie Silizium, beispielhaft in Form von Komplexen, in der Schmelze vorliegt.

Die zu erreichenden Blasenzahlen können für unterschiedliche Produkte nur dann verglichen werden, wenn die Blasenzahlen bekannt, insbesondere pro Kilogramm bekannt sind. Im Falle von Flachglas erfolgt oft die Angabe "Blasen/m$^2$" und bei Rohren die Angabe "Blasen/10m" Rohr. Der Ausfall durch Blasen ist weiterhin von Produkt zu Produkt unterschiedlich. Bei leichten Produkten mit einem Gewicht von beispielsweise 100 g würde bei einer Blase pro Kilogramm es rechnerisch zu einem Ausfall von 10% der erzeugten Produkte kommen, wohingegen bei Produkten mit einem Gewicht von 5 kg bereits eine Blase pro kg zu einem Totalausfall führen könnte.

Die sogenannte Blasenzahl, also die Angabe von Blasen pro kg, sollten allgemein bei weniger als 10 Blassen pro kg liegen, bevorzugt bei weniger als einer Blase pro kg und besonders bevorzugt bei weniger als 0,1 Blase pro kg (bzw. weniger als einer Blase pro 10 kg). Dabei gilt dass mit höheren Produktgewichten und strengeren Spezifikationen die Blasenzahl, wie zuvor ausgeführt, die Blasenzahl niedriger liegen muss.

Bevorzugt wird verfahrensgemäß ein zweistufiger Prozess durchgeführt, wobei in einem ersten Schritt die Identifikation der Stellen am Edelmetall umfassenden Bauteil erfolgt, an denen der lokale Sauerstoffpartialdruck kritische Werte erreicht, also in die Größenordnung von 1 bar kommt, insbesondere der $pO_2$ lokal auf einen kritischen Wert zwischen 0,8 bar und 1,2 bar, bevorzugt zwischen 0,9 bar und 1,1 bar, ansteigt, und anschließend, also nach Identifizierung dieser Stellen, dann lediglich lokal begrenzt eine Gegenmaßnahme erfolgt, um eine Bildung von Sauerstoffblasen zu vermeiden.

In der Regel ist eine lediglich lokale Bestimmung der Sauerstoffkonzentration messtechnisch nur sehr schwer zu erfassen. Es ist daher vorteilhaft, auf das Mittel der Simulation zurückzugreifen. Um eine solche Simulation durchführen zu können, sind daher die folgenden Schritte notwendig:

(1) Aufstellen eines elektrochemischen Modells, welches alle die Wasserzersetzung betreffenden relevanten Größen und deren Auswirkungen auf den Sauerstoffpartialdruck $pO_2$ an der Grenzfläche Bauteil/Glas beinhaltet,
(2) Ermittlung der notwendigen Kenndaten durch geeignete Laborexperimente, sowie
(3) Überführung des elektrochemischen Modells inklusive der Kenndaten und der gegebenen Verfahrensparameter in ein geeignetes Simulationstool.

Gemäß einer weiteren Ausführungsform der Erfindung liegt der lokale Sauerstoffpartialdruck, $pO_2$, zwischen 0,8 und 1,2 bar, bevorzugt zwischen 0,9 und 1,1 bar.

Gemäß einer weiteren Ausführungsform der Erfindung umfasst das Edelmetall umfassende Bauteil einen Rührtiegel mit einem rohrförmigen Einlass und einem Auslass, wobei die Maßnahme am Einlass und/oder am Auslass durchgeführt wird.

Bevorzugt umfasst das Bauteil eines der folgenden Edelmetalle und/oder eine Mischung oder Legierung aus den folgenden Edelmetallen: Platin, Rhodium, Iridium, Osmium, Rhenium, Ruthenium, Palladium, Gold, Silber.

Gemäß einer weiteren Ausführungsform der Erfindung ist in der wasserhaltigen Atmosphäre ein Taupunkt zwischen 20°C und 90eingestellt.

Bevorzugt umfasst die wasserhaltige Atmosphäre bis auf unvermeidliche Spuren keinen Sauerstoff. Insbesondere ist der $pO_2$ der wasserhaltigen Atmosphäre kleiner als 0,1 bar bevorzugt kleiner als 0,1 bar, bevorzugt kleiner als 0,01 bar und besonders bevorzugt kleiner als 0,001 bar.

Verfahrensgemäß sind unterschiedliche Glasprodukte herstellbar. Das Verfahren ist damit nicht beschränkt auf bestimmte Formgebungsverfahren. Das Glasprodukt umfasst damit insbesondere ein Glasrohr, einen Glasstab oder ein Flachglas. Gemäß einer Ausführungsform der Erfindung wird also ein als Glasprodukt ein Glasrohr, ein Glasstab oder ein Flachglas hergestellt.

Bevorzugt umfasst das verfahrensgemäß verarbeitete Glas ein Borosilikatglas, beispielsweise ein erdalkalifreies oder ein erdalkalihaltiges Borosilikatglas, beispielsweise Gläser, welche unter den Marken Duran bzw. Fiolax vertrieben werden, oder ein Erdalkali-Alumino-Silikatglas, oder ein Glas, welches unter dem Namen Suprax kommerziell erhältlich ist. Auch möglich ist die Herstellung von Alkali-Erdalkali-Silikatgläsern. Verfahrensgemäß lassen sich ebenfalls borfreie Gläser, insbesondere borfreie Neutralgläser, herstellen. Bevorzugt ist beispielsweise die Herstellung von borfreien oder borarmen Gläsern, insbesondere in Form von Glasrohren, welche zur Herstellung von Pharmaverpackungen Verwendung finden. Auch alkaliarme oder alkalifreie Gläser können verfahrensgemäß verarbeitet werden. Besonders geeignet ist das Verfahren weiterhin zur Herstellung von arsenarmen, bevorzugt arsenfreien Gläsern. Gemäß einer weiteren Ausführungsform der Erfindung wird also als Glas ein Borosilikatglas, beispielsweise ein erdalkalifreies oder ein erdalkalihaltiges Borosilikatglas, oder ein Alkali-Erdalkali-Silikatglas, oder ein borfreies Glas, insbesondere ein borfreies Neutralglas, oder ein alkaliarmes, bevorzug ein alkalifreies,Glas oder ein arsenarmes, bevorzugt arsenfreies, Glas hergestellt.

Sofern im Rahmen der vorliegenden Erfindung der Begriff "...-frei" verwendet wird, bedeutet dies, dass die betreffende Komponente lediglich in Form unvermeidlicher Spuren im Glas, beispielsweise aufgrund von Verunreinigungen, enthalten ist. Dieser unvermeidliche Spurengehalt liegt dabei unter 0,1 Mol-%.

Beispiele

In der folgenden Auflistung werden einige beispielhafte Glaszusammensetzungen und -zusammensetzungsbereiche (in Gew.-%) aufgelistet, welche mit dem erfindungsgemäßen Verfahren herstellbar sind.

Ausführungsbeispiel 1

Eine erste beispielhafte Zusammensetzung in Gew.-% eines mit dem erfindungsgemäßen Verfahren herstellbaren Glases ist wie folgt gegeben:

| | |
|---|---|
| $SiO_2$ | 30 bis 85 |
| $B_2O_3$ | 3 bis 20 |
| $Al_2O_3$ | 0 bis 15 |
| $Na_2O$ | 3 bis 15 |
| $K_2O$ | 3 bis 15 |
| ZnO | 0 bis 12 |
| $TiO_2$ | 0,5 bis 10 |
| CaO | 0 bis 0,1 |

Ausführungsbeispiel 2

Eine beispielhaft im unter Ausführungsbeispiel 1 aufgeführten Zusammensetzungsbereich liegende Glaszusammensetzung in Gew.-% lautet wie folgt:

| | |
|---|---|
| $SiO_2$ | 64,0 |
| $B_2O_3$ | 8,3 |
| $Al_2O_3$ | 4,0 |
| $Na_2O$ | 6,5 |
| $K_2O$ | 7,0 |
| ZnO | 5,5 |
| $TiO_2$ | 4,0 |
| $Sb_2O_3$ | 0,6 |
| $Cl^-$ | 0,1 |

Ausführungsbeispiel 3

Ein weiterer beispielhafter Zusammensetzungsbereich in Gew.-% lautet weiterhin wie folgt:

| | |
|---|---|
| $SiO_2$ | 58 bis 65 |
| $B_2O_3$ | 6 bis 10,5 |
| $Al_2O_3$ | 14 bis 25 |
| MgO | 0 bis 3 |
| CaO | 0 bis 9 |
| BaO | 3 bis 8 |
| ZnO | 0 bis 2, |

wobei die Summe des Gehalts von MgO, CaO und BaO dadurch gekennzeichnet ist, dass sie im Bereich von 8 Gew.-% bis 18 Gew.-% liegt.

Ausführungsbeispiel 4

Eine beispielhafte Glaszusammensetzung in Gew.-% in dem unter Ausführungsbeispiel 3 aufgeführten Bereich lautet wie folgt:

| | |
|---|---|
| $SiO_2$ | 61 |
| $B_2O_3$ | 10 |
| $Al_2O_3$ | 18 |
| MgO | 2,8 |
| CaO | 4,8 |

(fortgesetzt)

| | |
|---|---|
| BaO | 3,3 |

Ausführungsbeispiel 5

Eine weitere beispielhafte Glaszusammensetzung in Gew.-% lautet wie folgt:

| | |
|---|---|
| $SiO_2$ | 69 +/- 5 |
| $Na_2O$ | 8 +/- 2 |
| $K_2O$ | 8 +/- 2 |
| CaO | 7 +/- 2 |
| BaO | 2 +/- 2 |
| ZnO | 4 +/- 2 |
| $TiO_2$ | 1 +/- 1 |

Ausführungsbeispiel 6

Eine nochmals weitere beispielhafte Glaszusammensetzung in Gew.-% lautet wie folgt:

| | |
|---|---|
| $SiO_2$ | 80 +/- 5 |
| $B_2O_3$ | 13 +/- 5 |
| $Al_2O_3$ | 2,5 +/- 2 |
| $Na_2O$ | 3,5 +/- 2 |
| $K_2O$ | 1 +/- 1 |

Ausführungsbeispiel 7

Eine nochmals weitere beispielhafte Glaszusammensetzung in Gew.-% lautet wie folgt:

| | |
|---|---|
| $SiO_2$ | 75 |
| $B_2O_3$ | 10,5 |
| $Al_2O_3$ | 5 |
| $Na_2O$ | 7 |
| CaO | 1,5 |

Ausführungsbeispiel 8

Ein weiterer beispielhafter Zusammensetzungsbereich in Gew.-% lautet wie folgt:

| | |
|---|---|
| $SiO_2$ | 65 bis 75 |
| $Al_2O_3$ | 11 bis 18 |
| MgO | 5 bis 10 |
| CaO | 5 bis 10, |

wobei das Glas bis auf unvermeidliche Spuren kein $B_2O_3$, SrO, BaO, $CeO_2$ und PbO sowie höchstens 0,1 Gew.-% Alkalioxide enthält.

Ausführungsbeispiel 9

Ein nochmals weiterer beispielhafter Zusammensetzungsbereich in Gew.-% lautet wie folgt:

| | |
|---|---|
| $SiO_2$ | 50 bis 65 |
| $Al_2O_3$ | 15 bis 20 |

(fortgesetzt)

| | |
|---|---|
| $B_2O_3$ | 0 bis 6 |
| $Li_2O$ | 0 bis 6 |
| $Na_2O$ | 8 bis 15 |
| $K_2O$ | 0 bis 5 |
| MgO | 0 bis 5 |
| CaO | 0 bis 7, bevorzugt 0 bis 1 |
| ZnO | 0 bis 4, bevorzugt 0 bis 1 |
| $ZrO_2$ | 0 bis 4 |
| $TiO_2$ | 0 bis 1, bevorzugt im Wesentlichen $TiO_2$-frei. |

Weiterhin können im Glas enthalten sein zu 0 gew.-% bis 1 Gew.-% $P_2O_5$, SrO, BaO; sowie Läutermittel zu 0 Gew.-% bis1 Gew. -% : $SnO_2$, $CeO_2$ oder $As_2O_3$ oder andere Läutermittel.

Ausführungsbeispiel 10

Eine nochmals weitere beispielhafte Glaszusammensetzung in Gew.-% lautet wie folgt:

| | |
|---|---|
| $SiO_2$ | 72 |
| $B_2O_3$ | 11,5 |
| $Al_2O_3$ | 6, 8 |
| $Na_2O$ | 6,5 |
| $K_2O$ | 2,4 |
| CaO+MgO | 0, 7 |

Ausführungsbeispiel 11

Eine nochmals weitere beispielhafte Glaszusammensetzung in Gew.-% lautet wie folgt:

| | |
|---|---|
| $SiO_2$ | 73 |
| $B_2O_3$ | 11,2 |
| $Al_2O_3$ | 6,8 |
| $Na_2O$ | 6,8 |
| $K_2O$ | 1,2 |
| CaO+MgO | 1,0 |

Ausführungsbeispiel 12

Eine nochmals weitere beispielhafte Glaszusammensetzung in Gew.-% lautet wie folgt:

| | |
|---|---|
| $SiO_2$ | 80 |
| $B_2O_3$ | 12,7 |
| $Al_2O_3$ | 2,6 |
| $Na_2O$ | 4,3 |
| $K_2O$ | 0,1 |
| CaO+MgO | weniger als 0,1 |

Ausführungsbeispiel 13

Eine nochmals weitere beispielhafte Glaszusammensetzung in Gew.-% lautet wie folgt:

| | |
|---|---|
| $SiO_2$ | 69 |
| $B_2O_3$ | 10 |

(fortgesetzt)

| | |
|---|---|
| $Al_2O_3$ | 6 |
| $Na_2O$ | 6 |
| $K_2O$ | 2 |
| CaO+MgO | 1 |
| $Fe_2O_3$ | 1 |
| BaO | 1,5 |
| $TiO_2$ | 3 |

In allen oben genannten Ausführungsbeispielen können, sofern nicht bereits aufgeführt, wahlweise Läutermittel zu 0 Gew.-% bis 1 Gew.-%, so zum Beispiel $SnO_2$, $CeO_2$, $As_2O_3$, $Cl^-$, F- und/oder Sulfate, enthalten sein.

Beschreibung der Zeichnungen

Im Folgenden wird die Erfindung anhand von Zeichnungen näher erläutert. Es zeigen

Fig. 1    eine schematische Darstellung der Wasserzersetzung an der Grenzfläche Edelmetall umfassendes Bauteil/Glasschmelze,

Fig. 2    lokale Sauerstoffpartialdrücke für den Bereich des Übergangs von der Rinne zum Tiegel sowie im Tiegel für eine bestimmte Produktionsanlage, sowie

Fig. 3    den Verlauf des Sauerstoffpartialdrucks an der Grenzfläche Bauteil/Tiegel bei Spülung mit verschiedenen Trägergasen.

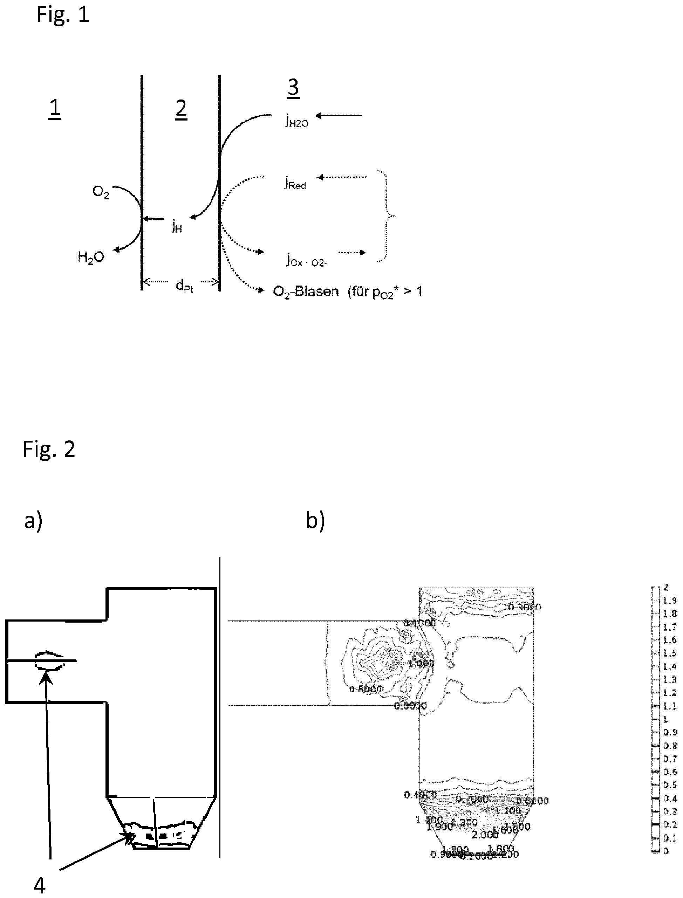

Fig. 1 zeigt schematisch den Vorgang der Wassersetzung an der Grenzfläche zwischen einem Edelmetall umfassenden Bauteil und einer Glasschmelze. Sowohl thermodynamische als auch kinetische Faktoren sind hierbei zu berücksichtigen.

Beispielhaft dargestellt ist im linken Bereich der Gasraum 1, welcher an der der Glasschmelze abgewandten Seite des Edelmetall umfassenden Bauteils 2 liegt, sowie der Bereich der Glasschmelze 3. Beispielhaft kann das Edelmetall umfassende Bauteil Platin umfassen oder aus Platin bestehen.

Thermodynamisch wird die Triebkraft der Wasserzersetzung durch Sauerstoff- und Wassergehalte sowohl im Gas als auch in der Schmelze bestimmt. Der tatsächlich lokal vorherrschende Sauerstoffpartialdruck wird dabei wesentlich durch die Diffusionseigenschaften der maßgeblichen, beispielsweise redoxaktiven, Komponenten in der Glasschmelze beeinflusst sowie von der Diffusion des Wasserstoffes durch das Edelmetall umfassende Bauteil. Sofern aufgrund der komplexen Vorgänge, welche sich durch die Teilchenströme von beispielsweise Wasser, der redoxaktiven Komponenten, des Sauerstoffs sowie von Wasserstoff ergeben, lokal der Sauerstoffpartialdruck zu groß wird, kommt es lokal zum Auftreten von Sauerstoffblasen.

Fig. 2 zeigt beispielhaft in Form zweier graphischer Darstellungen die lokalen Sauerstoffpartialdrücke, welche in einer Glasschmelze an einem Edelmetall umfassenden Bauteil auftreten. Beispielhaft wurde hier der Fall einer Herstellung von Glasrohren bestehend aus einem erdalkalihaltigen Borosilikatglas betrachtet.

In diesem beispielhaften Fall ist das Edelmetall umfassende Bauteil als Rührtiegel mit einem seitlichen Einlass und einem unten angeordneten Auslass ausgebildet. Nicht dargestellt sind die Rührwelle und Rührflügel. Betrachtet wurde vorliegend beispielhaft eine Glaszusammensetzung entsprechend des Ausführungsbeispiels 7.

Allgemein, ohne Beschränkung auf das hier betrachtete Beispiel des Glasrohres, bestehend aus einem erdalkalihaltigen Borosilikatglas, ist mit dem Verfahren der vorliegenden Erfindung aber auch die Herstellung von Flachglas oder von Glasstäben möglich. Auch andere Gläser, beispielsweise bor-, alkali- und/oder erdalkalifreie Gläser sind mit dem vorliegenden Verfahren herstellbar.

In Fig. 2 a) sind die Bereiche 4 mit kritischen Sauerstoffpartialdrücken dargestellt. Die Bereiche 4 am Bauteil, in welcher der Sauerstoffpartialdruck kritische Werte annimmt, sind hierbei mittels Pfeilen bezeichnet.

Fig. 2 b) zeigt eine weitere Darstellung des Edelmetall umfassenden Bauteils. Hier sind beispielhaft die am Edelmetall umfassenden Bauteil vorherrschenden Sauerstoffpartialdrücke dargestellt, wobei Bereiche gleicher Drücke durch "Höhenlinien" markiert sind, wie die am rechten Rand der Fig. 2 b) dargestellte Skala zeigt.

Es ist in beiden Figuren deutlich zu erkennen, dass im vorliegenden Beispielfall lediglich an einigen wenigen Stellen eine kritische Erhöhung des Sauerstoffpartialdrucks vorliegt. Daher muss auch nur an diesen Stellen eine entsprechende Gegenmaßnahme zur Verminderung der Wasserzersetzung und damit den daraus resultierenden Sauerstoffblasen erfolgen.

Vorteilhaft ist es insbesondere, wenn Gase eingesetzt werden, bei welchen keinerlei $H_2$ enthalten ist. Andernfalls kann der Wasserstoff in Edelmetallen, welche eine große $H_2$-Resorptionsfähigkeit aufweisen, beispielsweise Platin oder Platin umfassende Legierungen, über Diffusionsvorgänge auch an die Stellen der Grenzfläche Bauteil/Glasschmelze gelangen, wo keine kritischen Sauerstoffkonzentrationen vorliegen. Dies hätte den Nachteil, dass Wasserstoff mit redoxaktiven Substanzen in der Schmelze, beispielsweise Verunreinigungen mit Eisen oder Schwefel oder oxidischen Läutermitteln wie $SnO_2$ reagieren und gerade an hinsichtlich der Sauerstoffblasenbildung unkritischen Stellen des Bauteils zur Legierungen des Edelmetalls führen könnte, welche die Standzeit des Bauteils verringern.

Die bevorzugte Gegenmaßnahme zur Unterdrückung der lokal begrenzten Sauerstoffblasenbildung besteht in einer Verglasung des Edelmetall umfassenden Bauteils. Ist dies aus mechanischen Stabilitätsgründen nicht möglich, besteht die bevorzugte Gegenmaßnahme aus einem lokal begrenzten Angebot von Wasser auf der Außenseite des Edelmetall umfassenden Bauteils. Dabei wird ganz besonders bevorzugt mit einem kontrolliert angefeuchteten Trägergas gearbeitet, also mit einem Gas, dessen Taupunkt kontrolliert eingestellt wird. Durch diese gezielte Einstellung des Taupunkts kann die Wirkung des angebotenen Wassers gezielt gesteuert und zum anderen durch die Kontrolle des Sauerstoffanteils auch die Bildung flüchtiger Edelmetalloxide minimiert werden. Dazu kann das Trägergas mittels einer $ZrO_2$-Atmosphärensonde auf den $O_2$-Gehalt hin überwacht werden.

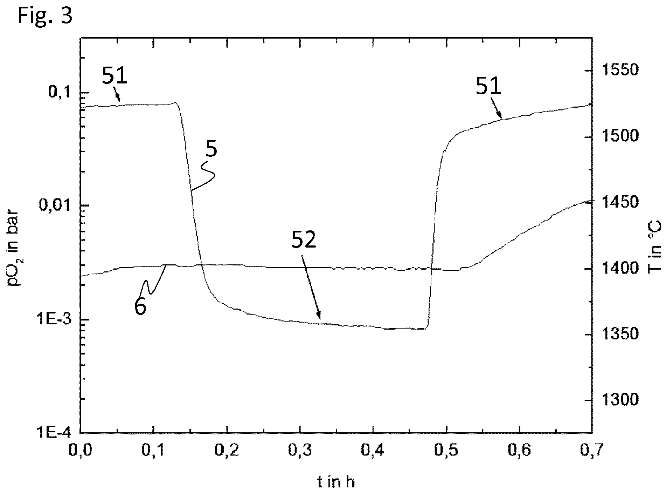

In Fig. 3 ist beispielhaft der Verlauf des Sauerstoffpartialdrucks an der Grenzfläche Bauteil/Glasschmelze bei Spülung mit verschiedenen Trägergasen gezeigt.

Auf der linken y-Koordinate ist dabei der Sauerstoffpartialdruck am Edelmetall umfassenden Bauteil bezeichnet. Den Sauerstoffpartialdruck in der Schmelze an der Grenze Bauteil/Glasschmelze über die auf der x-Achse aufgetragene Zeit gibt Kurve 5 wieder.

Kurve 6 gibt den Temperaturverlauf an der Grenzfläche Bauteil/Glasschmelze über die Zeit wieder, wobei die Temperatur in °C auf der rechten y-Koordinate aufgetragen ist.

Dabei ist deutlich zu erkennen, dass angefeuchtete Luft zu einem unkritischen Sauerstoffpartialdruck von weniger als 0,1 bar an der Grenzfläche Bauteil/Glasschmelze führen kann, wenn der Taupunkt entsprechend hoch liegt (siehe Bereiche 51 der Kurve 5). Vorliegend wurde der Taupunkt auf 60°C eingestellt. Wird die Spülung von angefeuchteter Luft auf angefeuchteten Stickstoff umgestellt, wobei der Taupunkt gleich bleibt, also vorliegend beispielhaft ebenfalls 60°C beträgt, nimmt der Sauerstoffpartialdruck an der Grenzfläche Bauteil/Glasschmelze nochmals deutlich ab, wie im Bereich 52 der Kurve 5 zu sehen ist.

Dies verdeutlicht, dass der Einsatz eines angefeuchteten Trägergases, welches selbst keinen molekularen Sauerstoff aufweist, zwei Vorteile mit sich bringt:

(1) Zum einen fällt die Erniedrigung des lokalen Sauerstoffpartialdrucks an der Grenzfläche Bauteil/Glasschmelze stärker aus.

(2) Zum anderen wird die Oxidation des mindestens einen Edelmetalls im Edelmetall umfassenden Bauteil auf der Außenseite des Bauteils, also an der der Schmelze abgewandten Seite, drastisch reduziert. Dies resultiert in einer größeren Standzeit.

Sofern die lokal begrenzten Stellen am Edelmetall umfassenden Bauteil bekannt sind, welche entsprechend geschützt werden müssen, kann die Nutzung des angefeuchteten Trägergases auf eben diese Stellen begrenzt werden. Zusätzlich kann das Edelmetall hier lokal weiter durch besonders wirksame Beschichtungen oder durch lokal begrenzte Verstärkungen der Wanddicke geschützt werden. Muss die Verstärkung der Wanddicke lediglich lokal begrenzt durchgeführt werden, ist aber auch die Wirtschaftlichkeit einer solchen Maßnahme gegeben.

Somit ist es verfahrensgemäß möglich, mit der Kombination der Ermittlung der lokal begrenzten Stellen, an denen es zu einer kritischen Erhöhung des Sauerstoffpartialdrucks und somit zu einer verstärkten Blasenbildung kommt, und den dann lediglich lokal begrenzt durchzuführenden Gegenmaßnahmen möglich, sowohl die Bildung von Sauerstoffblasen zu vermindern oder sogar ganz zu unterdrücken sowie zum, anderen die Standzeit des Edelmetall umfassenden Bauteils zu maximieren.

Bezugszeichenliste

1    Gasraum
2    Edelmetall umfassendes Bauteil
3    Bereich der Glasschmelze
4    Bereiche der Glasschmelze mit für Blasenbildung kritischem Sauerstoffpartialdruck
5    Kurve des Sauerstoffpartialdrucks an der Grenzfläche Bauteil/Glasschmelze über die Zeit

51    Bereich von Kurve 5 mit Luft als Trägergas
52    Bereich von Kurve 5 mit Stickstoff als Trägergas
6     Kurve der Temperatur an der Grenzfläche Bauteil/Glasschmelze über die Zeit

**Patentansprüche**

1.  Verfahren zur Herstellung eines Glasprodukts, insbesondere mit geringem Blasengehalt, aus einer Schmelze, wobei die Schmelze mindestens zum Teil mit einem Edelmetall umfassenden Bauteil in Berührung kommt und einen temperaturabhängigen Sauerstoffpartialdruck aufweist, wobei der Sauerstoffpartialdruck über das Volumen der Schmelze lokal variieren kann oder variiert, und wobei an den Orten des Edelmetall umfassenden Bauteils, welche in Kontakt mit der Schmelze stehen und wo der Sauerstoffpartialdruck $pO_2$ lokal kritische Werte erreicht, insbesondere der Sauerstoffpartialdruck $pO_2$ lokal auf einen kritischen Wert zwischen 0,8 bar und 1,2 bar, bevorzugt zwischen 0,9 bar und 1,1 bar, ansteigt, an dem Edelmetall umfassenden Bauteil lediglich lokal mindestens eine der folgenden Maßnahmen durchgeführt wird:

    - Die der Schmelze abgewandte Seite des Edelmetall umfassenden Bauteils wird beschichtet, insbesondere mit einem Glas;
    - Die der Schmelze abgewandte Seite des Edelmetall umfassenden Bauteils wird mit einer wasserhaltigen Atmosphäre kontaktiert, insbesondere mit einer wasserhaltigen Schutzgasatmosphäre, z.B. $N_2$ und/oder Edelgas; oder
    - Die Dicke des Bauteils wird erhöht.

2.  Verfahren nach Anspruch 1, wobei in einem ersten Schritt die Identifikation der Stellen am Edelmetall umfassenden Bauteil erfolgt, an denen der lokale Sauerstoffpartialdruck kritische Werte erreicht insbesondere der $pO_2$ lokal auf einen kritischen Wert zwischen 0,8 bar und 1,2 bar, bevorzugt zwischen 0,9 bar und 1,1 bar, ansteigt.

3.  Verfahren nach einem der Ansprüche 1 bis 2, wobei das Edelmetall umfassende Bauteil einen Rührtiegel mit einem rohrförmigen Einlass und einem Auslass umfasst und die Maßnahme am Einlass und/oder am Auslass durchgeführt wird.

4.  Verfahren nach einem der Ansprüche 1 bis 3, wobei das Bauteil eines der folgenden Edelmetalle und/oder eine Mischung oder Legierung aus den folgenden Edelmetallen umfasst: Platin, Rhodium, Iridium, Osmium, Rhenium, Ruthenium, Palladium, Gold, Silber.

5.  Verfahren nach einem der Ansprüche 1 bis 4, wobei in der wasserhaltigen Atmosphäre ein Taupunkt zwischen 20°C und 90°C, bevorzugt zwischen 20°C und 70°C, besonders bevorzugt zwischen 30°C und 65°C, eingestellt ist.

6.  Verfahren nach einem der Ansprüche 1 bis 5, wobei der $pO_2$ der wasserhaltigen Atmosphäre kleiner als 0,1 bar, bevorzugt kleiner als 0,01 bar und besonders bevorzugt kleiner als 0,001 bar ist.

7.  Verfahren nach einem der Ansprüche 1 bis 6, wobei als Glasprodukt ein Glasrohr, ein Glasstab oder ein Flachglas hergestellt wird.

8.  Verfahren nach einem der Ansprüche 1 bis 7, wobei als Glas ein Borosilikatglas, beispielsweise ein erdalkalifreies oder ein erdalkalihaltiges Borosilikatglas ist, oder ein Alkali-Erdalkali-Silikatglas, oder ein borfreies Glas, insbesondere ein borfreies Neutralglas, insbesondere zur Herstellung von Pharmaverpackungen, oder ein alkaliarmes, bevorzugt alkalifreies, Glas oder ein arsenarmes, bevorzugt arsenfreies, Glas hergestellt wird.

## Fig. 1

## Fig. 2

a)                                                b)

Fig. 3

Europäisches Patentamt
European Patent Office
Office européen des brevets

**EUROPÄISCHER RECHERCHENBERICHT**

Nummer der Anmeldung

EP 17 17 3621

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2004/177649 A1 (DORFELD WILLIAM G [US] ET AL) 16. September 2004 (2004-09-16) * Absätze [0017] - [0018]; Anspruch 1 * ----- | 1-4,6-8 | INV. C03B5/16 C03B5/167 C03B5/43 |
| X,D | WO 98/18731 A2 (CORNING INC [US]) 7. Mai 1998 (1998-05-07) * Seite 6, Zeilen 2-21; Ansprüche 6, 7 * ----- | 1-8 | |
| A | US 2005/217317 A1 (LAUTENSCHLAEGER GERHARD [DE] ET AL) 6. Oktober 2005 (2005-10-06) * Absatz [0011] * ----- | 1 | |
| A | US 2003/037572 A1 (DICK ERHARD [DE] ET AL) 27. Februar 2003 (2003-02-27) * Anspruch 1; Abbildung 1 * ----- | 1 | |
| A | US 2010/192633 A1 (DEANGELIS GILBERT [US] ET AL) 5. August 2010 (2010-08-05) * Anspruch 6 * ----- | 1 | |
| A | DE 10 2013 209785 A1 (HERAEUS MATERIALS TECH GMBH [DE]) 27. November 2014 (2014-11-27) * Anspruch 1 * ----- | 1 | RECHERCHIERTE SACHGEBIETE (IPC) C03B |

Der vorliegende Recherchenbericht wurde für alle Patentansprüche erstellt

| Recherchenort | Abschlußdatum der Recherche | Prüfer |
|---|---|---|
| Den Haag | 12. Oktober 2017 | Flügel, Alexander |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.** EP 17 17 3621

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-10-2017

| Im Recherchenbericht angeführtes Patentdokument | Datum der Veröffentlichung | Mitglied(er) der Patentfamilie | Datum der Veröffentlichung |
|---|---|---|---|
| US 2004177649 A1 | 16-09-2004 | CN 1759070 A | 12-04-2006 |
| | | EP 1613559 A1 | 11-01-2006 |
| | | JP 2006522001 A | 28-09-2006 |
| | | KR 20050109559 A | 21-11-2005 |
| | | TW I270537 B | 11-01-2007 |
| | | US 2004177649 A1 | 16-09-2004 |
| | | WO 2004083134 A1 | 30-09-2004 |
| WO 9818731 A2 | 07-05-1998 | CA 2269843 A1 | 07-05-1998 |
| | | DE 69730350 D1 | 23-09-2004 |
| | | DE 69730350 T2 | 01-09-2005 |
| | | EP 0951453 A2 | 27-10-1999 |
| | | JP 4683674 B2 | 18-05-2011 |
| | | JP 2001503008 A | 06-03-2001 |
| | | KR 20000053039 A | 25-08-2000 |
| | | US 5785726 A | 28-07-1998 |
| | | WO 9818731 A2 | 07-05-1998 |
| US 2005217317 A1 | 06-10-2005 | CN 1680200 A | 12-10-2005 |
| | | DE 102004015577 A1 | 20-10-2005 |
| | | JP 4890776 B2 | 07-03-2012 |
| | | JP 2005281130 A | 13-10-2005 |
| | | KR 20060044969 A | 16-05-2006 |
| | | TW I361175 B | 01-04-2012 |
| | | US 2005217317 A1 | 06-10-2005 |
| | | US 2010018251 A1 | 28-01-2010 |
| US 2003037572 A1 | 27-02-2003 | DE 10141585 A1 | 13-03-2003 |
| | | FR 2828879 A1 | 28-02-2003 |
| | | JP 4197909 B2 | 17-12-2008 |
| | | JP 2003095663 A | 03-04-2003 |
| | | US 2003037572 A1 | 27-02-2003 |
| US 2010192633 A1 | 05-08-2010 | CN 101166696 A | 23-04-2008 |
| | | CN 102838266 A | 26-12-2012 |
| | | EP 1874696 A1 | 09-01-2008 |
| | | JP 5723405 B2 | 27-05-2015 |
| | | JP 5815585 B2 | 17-11-2015 |
| | | JP 2008539160 A | 13-11-2008 |
| | | JP 2013116852 A | 13-06-2013 |
| | | JP 2013173665 A | 05-09-2013 |
| | | KR 20080003930 A | 08-01-2008 |
| | | TW I362372 B | 21-04-2012 |
| | | US 2006242996 A1 | 02-11-2006 |
| | | US 2009126405 A1 | 21-05-2009 |
| | | US 2009241602 A1 | 01-10-2009 |

EPO FORM P0461

Für nähere Einzelheiten zu diesem Anhang : siehe Amtsblatt des Europäischen Patentamts, Nr.12/82

Seite 1 von 2

**ANHANG ZUM EUROPÄISCHEN RECHERCHENBERICHT**
**ÜBER DIE EUROPÄISCHE PATENTANMELDUNG NR.**

EP 17 17 3621

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-10-2017

| Im Recherchenbericht angeführtes Patentdokument | Datum der Veröffentlichung | Mitglied(er) der Patentfamilie | Datum der Veröffentlichung |
|---|---|---|---|
| | | US 2010192633 A1 | 05-08-2010 |
| | | WO 2006115972 A1 | 02-11-2006 |
| DE 102013209785 A1 | 27-11-2014 | CN 104176906 A | 03-12-2014 |
| | | DE 102013209785 A1 | 27-11-2014 |
| | | JP 2014227337 A | 08-12-2014 |

EPO FORM P0461

Für nähere Einzelheiten zu diesem Anhang : siehe Amtsblatt des Europäischen Patentamts, Nr.12/82

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9818731 A2